# EUROPEAN PATENT APPLICATION

(11) **EP 4 852 568 A1**
(43) Date of publication of application: **09.12.2026**
(21) Application number: 24920959.4
(22) Date of filing: 01.02.2024
(51) Int. Cl.: H04W 72/12

(54) **DELAY INFORMATION REPORTING METHOD AND APPARATUS, DELAY INFORMATION RECEIVING METHOD AND APPARATUS, AND COMMUNICATION SYSTEM**

(71) Applicant: 1FINITY INC., Kawasaki-shi, Kanagawa 211-8588 (JP)
(72) Inventor: LI, Guorong, Beijing 100022 (CN); JIA, Meiyi, Beijing 100022 (CN); YI, Su, Beijing 100022 (CN); WANG, Xin, Beijing 100022 (CN)
(74) Representative: Haseltine Lake Kempner LLP
(86) International application number: PCT/CN2024/075270
(87) International publication number: WO 2025/160896

(57) **Abstract**

Embodiments of this disclosure provide methods and apparatuses for reporting and receiving delay information and a communication system. The apparatus for reporting delay information is applicable to a terminal equipment and includes a first processing unit configured to control the terminal equipment to perform following operations: triggering at least one delay status report (DSR) by the terminal equipment; and reporting delay information for at least one logical channel group (LCG) by the terminal equipment.

## Description

### Technical Field

This disclosure relates to the field of communication technologies.

### Background

In the 3rd Generation Partnership Project (3GPP), study of enhancement of extended reality (XR) services began in Release 18. XR services refer to environments of all real and virtual combinations and human-computer interaction generated by computer technologies and wearable devices. XR services may include virtual reality (VR) services, augmented reality (AR) services and mixed reality (MR) services.

For XR services with strict delay restrictions, a scheduler with delay information is beneficial to meet their quality of service (QoS). The scheduler with delay information may be implemented in downlink, because a network side (such as a gNB) learns QoS characteristics of a user equipment (such as learning via a 5G quality of service parameter, such as a 5G QoS identifier (5QI)), and also learns when XR frames (packets) arrive, hence, it also learns a degree of urgency of scheduling buffered data. However, for uplink, as a current buffer status report (BSR) only provides a size of buffered data and does not transfer information on how long data in a terminal equipment have been buffered, a gNB scheduler is unable to accurately learn a time of buffer of the data in the terminal equipment. Based on the above considerations, 3GPP deemed that reporting delay information by the terminal equipment is beneficial to XR.

In 3GPP Release 18, a delay status report (DSR) procedure is introduced for XR. The procedure is used for a terminal equipment to provide a delay status of a logical channel group (LCG) to a serving gNB. The delay status (or also referred to as delay information) of an LCG includes a remaining time and a total amount of delay-critical uplink data of the LCG, wherein the remaining time is a shortest remaining value of a packet data convergence protocol discard timer (PDCP discardTimer) of a service data unit (SDU) buffered in the LCG, and the total amount of delay-critical uplink data may be obtained according to data volume calculation procedures of radio link control (RLC) entities and packet data convergence protocol (PDCP) entities associated with all logical channels in the LCG.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

Radio resource control (RRC) signaling may control a delay status report (DSR) procedure by configuring a remainingTimeThreshold parameter, the parameter being a threshold of a remaining time for triggering a DSR by an LCG.

It was found by the inventors that in the related art, it is not specified for which LCGs delay information is reported, or, in other words, it is not specified LCGs in a delay status report media access control control element (DSR MAC CE) to which LCGi fields that are set to 1 correspond. In addition, a remaining time field indicates a remaining value of a shortest PDCP discardTimer in all packet data convergence protocol service data units (PDCP SDUs) buffered for a reported LCG. If no buffered PDCP SDU is in the LCG, for example, the LCG is empty (such as there are no pending data) or all PDCP SDUs buffered in the LCG have been discarded (for example, discardTimers of the PDCP SDUs have expired) or data buffered in the LCG (including data of a PDCP layer and an RLC layer) have all been included in a current media access control protocol data unit (MAC PDU), it is unclear what value the remaining time field indicates.

In order to solve at least one of the above problems or other similar problems, embodiments of this disclosure provide methods and apparatuses for reporting and receiving delay information and a communication system.

According to one aspect of the embodiments of this disclosure, there is provided an apparatus for reporting delay information, applicable to a terminal equipment, the apparatus including a first processing unit configured to control the terminal equipment to perform following operations:
triggering at least one delay status report (DSR) by the terminal equipment; and
reporting delay information for at least one logical channel group (LCG) by the terminal equipment.

According to another aspect of the embodiments of this disclosure, there is provided an apparatus for receiving delay information, applicable to a network device, the apparatus including a fifth processing unit configured to control the network device to perform following operations:
receiving delay information reported by a terminal equipment for at least one logical channel group (LCG), wherein the at least one logical channel group (LCG) includes:
a configured logical channel group; and/or
a logical channel group configured for delay status reporting; and/or
a configured logical channel group having pending data; and/or
a logical channel group configured for delay status reporting and having pending data; and/or
a logical channel group configured for delay status reporting and having a remaining time below a configured threshold, or a logical channel group configured for delay status reporting and for which a delay status report is triggered, or a logical channel group configured for delay status reporting and having a pending delay status report; and/or
a logical channel group for which the delay status report is triggered, or a logical channel group to which the delay status report corresponds; and/or
a logical channel group having pending data after a media access control protocol data unit (MAC PDU) containing a delay status report media access control control element (DSR MAC CE) is assembled.

An advantage of the embodiments of this disclosure exists in that this disclosure provides a method for reporting which LCGs in a delay status report (DSR) by a terminal equipment and/or a method for indicating a remaining time. This is helpful to determine behaviors of the terminal equipment, so that the network device and the terminal equipment have consistent understanding of the delay information, which is simple to implement, and has relatively small impact on standards.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment.
FIG. 1 is schematic diagram of a communication system of embodiments of this disclosure;
FIG. 2 is a schematic diagram of a format of a delay status report media access control control element (DSR MAC CE);
FIG. 3 is a schematic diagram of a method for reporting delay information of embodiments of a first aspect;
FIG. 4 is a schematic diagram of triggering a DSR based on the related art;
FIG. 5 is a schematic diagram of a method for triggering a delay status report of embodiments of a second aspect;
FIG. 6 is another schematic diagram of the method for triggering a delay status report of the embodiments of the second aspect;
FIG. 7 is a schematic diagram of a method for cancelling a delay status report of embodiments of a third aspect;
FIG. 8 is a schematic diagram of a method for receiving delay information of embodiments of a fourth aspect;
FIG. 9 is another schematic diagram of the method for receiving delay information of the embodiments of the fourth aspect;
FIG. 10 is a schematic diagram of an apparatus for reporting delay information of embodiments of a fifth aspect;
FIG. 11 is a schematic diagram of an apparatus for triggering a delay status report of the embodiments of the fifth aspect;
FIG. 12 is another schematic diagram of the apparatus for triggering a delay status report of the embodiments of the fifth aspect;
FIG. 13 is a schematic diagram of an apparatus for cancelling a delay status report of the embodiments of the fifth aspect;
FIG. 14 is a schematic diagram of an apparatus for receiving delay information of embodiments of a sixth aspect;
FIG. 15 is another schematic diagram of the apparatus for receiving delay information of the embodiments of the sixth aspect;
FIG. 16 is a further schematic diagram of the apparatus for receiving delay information of the embodiments of the sixth aspect;
FIG. 17 is a schematic diagram of a terminal equipment of embodiments of a seventh aspect; and
FIG. 18 is a schematic diagram of a network device of embodiments of the seventh aspect.

### Detailed Description of the Disclosure

These and further aspects and features of this disclosure will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any level, which may, for example, include but not limited to the following communication protocols: 1G (generation), 2G, 2.5G, 2.75G, 3G, 4G, 4.5G, 5G, New Radio (NR), and 6G etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" refers to, for example, an equipment accessing to a communication network and receiving network services via a network device, which may also be referred to as "a terminal equipment (TE)". The terminal equipment may be fixed or mobile, and may also be referred to as a mobile station (MS), a terminal, a subscriber station (SS), an access terminal (AT), or a mobile terminal (MT), etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, a digital camera, a wearable device, and a terminal supporting XR services, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipments described above. In this text, "a device" may refer to a network device, and may also refer to a terminal equipment.

In the following description, without causing confusion, the terms "uplink control signal" and "uplink control information (UCI)" or "physical uplink control channel (PUCCH)" are interchangeable, and terms "uplink data signal" and "uplink data information" or "physical uplink shared channel (PUSCH)" are interchangeable.

The terms "downlink control signal" and "downlink control information (DCI)" or "physical downlink control channel (PDCCH)" are interchangeable, and the terms "downlink data signal" and "downlink data information" or "physical downlink shared channel (PDSCH)" are interchangeable.

In addition, uplink signals may include uplink data signals and/or uplink control signals and/or PRACHs and/or SRSs, etc., and may also be referred to as uplink transmissions (UL transmissions) or uplink information or uplink channels. Transmitting uplink transmission on an uplink resource may be understood as transmitting the uplink transmission by using the uplink resource. Downlink signals may include downlink data signals and/or downlink control signals and/or synchronization signals (SSs, such as PSSs/SSSs) and/or broadcast channels (PBCHs) and/or SSBs (SS/PBCH blocks, including PSSs, SSSs, PBCHs and their DMRSs) and/or CSI-RSs, etc., and may also be referred to as downlink transmissions (DL transmissions) or downlink information or downlink channels. Transmitting/receiving downlink transmissions on downlink resources may be understood as transmitting/receiving the downlink transmissions by using the downlink resources.

In the embodiments of this disclosure, high layer signaling may be, for example, radio resource control (RRC) signaling; for example, it is referred to an RRC message, which includes an MIB, system information, and a dedicated RRC message; or, it is referred to an as an RRC information element (RRC IE). Higher-layer signaling may also be, for example, medium access control (MAC) signaling, or a MAC control element (MAC CE); however, this disclosure is not limited thereto.

In the embodiments of this disclosure, multiple means at least two, or two or more than two.

In the embodiments of this disclosure, "predefined" means defined in a protocol or determined according to a rule defined in a protocol, without needing additional configuration. Configuration/indication refer(s) to configuring/indicating directly or indirectly by a network device via high layer signaling and/or physical layer signaling. Configuration/indication may be performed by introducing high layer parameters into high layer signaling. The high layer parameters refer to information fields and/or information elements (IEs)/information units in the high layer signaling. The physical layer signaling refers to, for example, control information (DCI) carried by a physical control channel or control information carried by a sequence; however, it is not limited thereto.

For ease of description, following description shall be given by taking that a base station serves as an access network device as an example. In the following description, without causing confusion, "if...", "in a case where..." and "when..." may be used interchangeably.

Scenarios in the embodiments of this disclosure shall be described below by way of examples; however, this disclosure is not limited thereto.

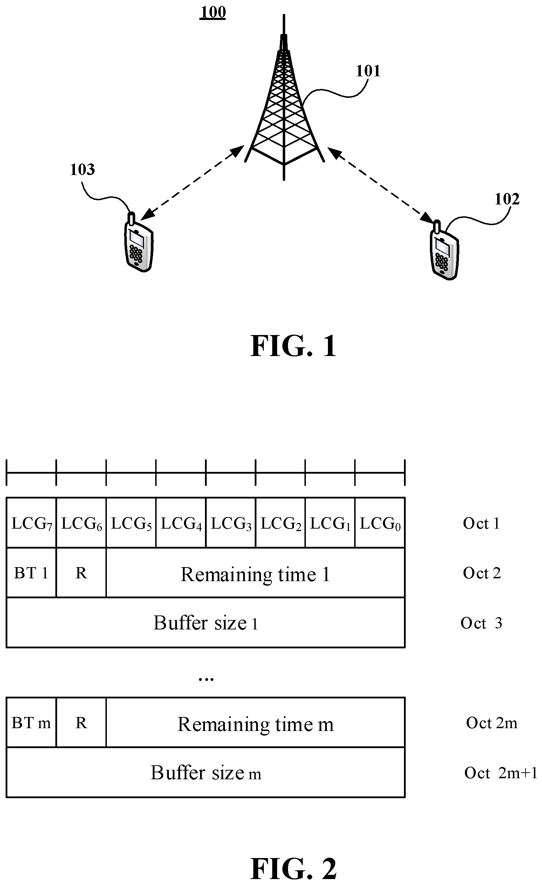

FIG. 1 is a schematic diagram of a communication system of embodiments of this disclosure, in which a case where terminal equipments and a network device are taken as examples is schematically shown. As shown in FIG. 1, the communication system 100 may include a network device 101 and terminal equipments 102, 103. For the sake of simplicity, an example having only two terminal equipments and one network device is schematically given in FIG. 1; however, the embodiments of this disclosure are not limited thereto.

In the embodiments of this disclosure, existing services or services that may be implemented in the future may be performed between the network device 101 and the terminal equipments 102, 103. For example, such services may include but not limited to an enhanced mobile broadband (eMBB), massive machine type communication (mMTC), and ultra-reliable and low-latency communication (URLLC), etc.

The terminal equipment 102 may transmit data to the network device 101, such as in a granted or grant-free manner. The network device 101 may receive data transmitted by one or more terminal equipments 102 and feed back information to the terminal equipment 102, such as acknowledgement (ACK)/non-acknowledgement (NACK) information. According to the feedback information, the terminal equipment 102 may acknowledge end of a transmission process, or may perform new data transmission, or may perform data retransmission.

It should be noted that FIG. 1 shows that two terminal equipments 102, 103 are both in coverage of the network device 101. However, this disclosure is not limited thereto, and the two terminal equipments 102, 103 may not be in coverage of the network device 101, or one terminal equipment 102 is in coverage of the network device 101 and the other terminal equipment 103 is out of coverage of the network device 101.

In the embodiments of this disclosure, "reporting" means that a terminal equipment transmits information to a network device, and "reporting" may be replaced with "indicating", etc.

In the embodiments of this disclosure, that a logical channel group (LCG) has data available for transmission may also be referred to as that a logical channel group has data to be transmitted, or a logical channel group has buffered data. Buffered data may be replaced with data available for transmission or pending data.

In the embodiments of this disclosure, "pending", "to be transmitted" and "buffered" have the same meaning and may be interchangeably.

### Embodiments of a first aspect

Radio resource control (RRC) may control a delay status report (DSR) procedure by configuring an LCG with a remainingTimeThreshold parameter. This parameter is a threshold for use by the LCG to trigger a remaining time of the DSR, and different LCGs may be configured with their respective remainingTimeThreshold parameters. The RRC signaling is transmitted by a network device to a terminal equipment, such as an RRC reconfiguration or an RRC resume message, etc.

If an LCG is configured for delay status reporting, a remaining value of a smallest packet data convergence protocol discard timer (PDCP discardTimer) in all uplink data buffered for the LCG is below remaningTimeThreshold, and if the LCG has no pending delay status report (DSR) since a last transmission of a delay status report media access control control element (DSR MAC CE), the DSR is triggered for the LCG. If there is at least one pending DSR, if there are uplink scheduling channel (UL-SCH) resources available for new transmission and the UL-SCH resources are able to accommodate a DSR MAC CE plus its sub-header after logical channel prioritization (LCP), a DSR MAC CE is generated.

A media access control protocol data unit (MAC PDU) includes at most one DSR MAC CE. If a MAC PDU is able accommodate service data units (SDUs) with which all pending DSRs are associated, the MAC does not include the DSR MAC CE in the MAC PDU.

After a DSR is triggered, it is deemed as being pending until it is canceled. When all SDUs associated with a pending DSR are discarded, or when a MAC PDU is transmitted and the MAC PDU includes all SDUs with which a pending DSR is associated or includes a DSR MAC CE (which contains delay information of all SDUs associated with the pending DSR), the MAC entity cancels the pending DSR.

A field included in the DSR MAC CE may be a logical channel group field (LCGi field), a remaining time field, a buffer size table (BT) field, and a buffer size field, etc. Explanations of these fields may be as shown in Table 1.

**Table 1**

| |
|---|
| - LCGᵢ: This field indicates the presence of delay information (i.e. the Remaining Time and Buffer Size fields) for the LCG i. The LCGᵢ field set to 1 indicates that the delay information for the LCG i is reported. The LCGᵢ field set to 0 indicates that the delay information for the LCG i is not reported; |
| - Remaining Time: This field indicates the shortest remaining value of PDCP *discardTimer* (described in clause 7.3 in TS 38.323 [4]) among all PDCP SDUs buffered for an LCG, at the time of the first symbol of the first PUSCH transmission that includes this DSR MAC CE. |
| The length of this field is 6 bits. The value *r* in this field indicates a remaining time within the range of (*r*, *r +* 1] msec; |
| - BT: This field is present only if the corresponding LCG is configured with *additionalBSR-TableAllowed*; otherwise, this field is reserved. If present, the BT field set to 1 indicates that the buffer sizes specified in Table 6.1.3.1-3 are used to set the value of the Buffer Size field, while the BT field set to 0 indicates that the buffer sizes specified in Table 6.1.3.1-2 are used instead; |
| - Buffer Size: The Buffer Size field indicates the total amount of delay-critical UL data for an LCG according to the data volume calculation procedure specified in clause 5.5 in TS 38.322 [3] and clause 5.6 in TS 38.323 [4] for the associated RLC and PDCP entities, respectively, after the MAC PDU has been built. If the corresponding LCG is configured with *additionalBSR-TableAllowed* and the amount of delay-critical UL data for an LCG is within the buffer sizes specified in Table 6.1.3.1-3, the MAC entity shall use the buffer sizes specified in Table 6.1.3.1-3 to set the value of this field; otherwise, the MAC entity shall use Table 6.1.3.1-2 instead. This field is indicated in number of bytes. The length of this field is 8 bits. |

FIG. 2 is a schematic diagram of a format of the delay status report media access control control element (DSR MAC CE). In FIG. 2, R denotes reserved bits. An explanation of the format of the DSR MAC CE may be as shown in Table 2.

**Table 2**

| |
|---|
| The Remaining Time, the BT, and the Buffer Size fields for an LCG shall be reported in two consecutive octets. These three fields for different LCGs shall be included in a DSR MAC CE in ascending order based on theLCGᵢ. |

Following two problems exist in the related art.

Problem 1: which LCGs report delay information, or, in other words, which LCGs in a delay status report media access control control element (DSR MAC CE) correspond to LCGi fields that are set to 1, is not specified in the related art.

Problem 2: a remaining time field of a DSR MAC CE indicates a remaining value of a shortest PDCP discardTimer in all packet data convergence protocol service data units (PDCP SDUs) buffered for a reported LCG. If no buffered PDCP SDU is in the LCG, for example, the LCG is empty (such as there are no pending data) or all PDCP SDUs buffered in the LCG have been discarded (for example, discardTimers of the PDCP SDUs have expired) or data buffered in the LCG (including data of a PDCP layer and an RLC layer) have all been included in a current media access control protocol data unit (MAC PDU), it is unclear what value the remaining time field indicates.

To solve problem 1 described above, embodiments of a first aspect of this disclosure provide a method for reporting delay information, applicable to a terminal equipment, such as the terminal equipment 102 shown in FIG. 1.

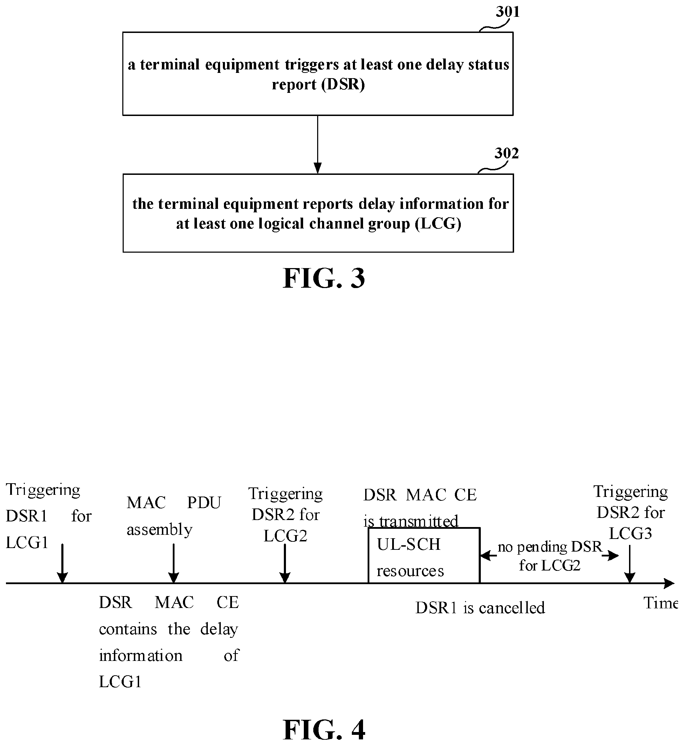

FIG. 3 is a schematic diagram of the method for reporting delay information of the embodiments of the first aspect. As shown in FIG. 3, the method for reporting delay information includes:
operation 301: a terminal equipment triggers at least one delay status report (DSR); and
operation 302: the terminal equipment reports delay information for at least one logical channel group (LCG).

In operation 301, according to the above description, the terminal equipment may trigger at least one DSR, and the DSR is pending until it is cancelled. For example, the terminal equipment may possibly trigger DSRs for more than one LCG, and one or more DSRs may be triggered for one LCG.

In operation 302, for the at least one DSR triggered (or pending or not cancelled) in operation 301, the terminal equipment reports delay information for at least one LCG. The delay information for one LCG includes, for example, a remaining time and a buffer size. In addition, the delay information may include a buffer size table (BT), or may not include a BT.

In at least some embodiments of operation 302, in a case where at least one delay status report (DSR) is triggered, a terminal equipment (a MAC entity of the terminal equipment) may report delay information for at least one of the following logical channel groups (LCGs):
Option 1: configured logical channel groups (LCGs);
A modification to the standard may be as shown in Table 3.

**Table 3**

| | | |
|---|---|---|
| If there is at least one DSR pending, the MAC entity shall: | | |
| | 1> if UL-SCH resources are available for a new transmission and the UL-SCH resources can accommodate the DSR MAC CE plus its subheader as a result of logical channel prioritization: | |
| | | 2> instruct the Multiplexing and Assembly procedure to generate the DSR MAC CE **including all configured LCGs;** |
| | 1> else if there is no pending SR already triggered by the DSR procedure for the same logical channel as of this DSR: | |
| | | 2> trigger a Scheduling Request. |

Option 2: configured LCGs which are configured with delay status reporting.
A modification to the standard may be as shown in Table 4.

**Table 4**

| | | |
|---|---|---|
| If there is at least one DSR pending, the MAC entity shall: | | |
| | 1> if UL-SCH resources are available for a new transmission and the UL-SCH resources can accommodate the DSR MAC CE plus its subheader as a result of logical channel prioritization: | |
| | | 2> instruct the Multiplexing and Assembly procedure to generate the DSR MAC CE **including all LCGs which are configured with delay status reporting;** |
| | 1> else if there is no pending SR already triggered by the DSR procedure for the same logical channel as of this DSR: | |
| | | 2> trigger a Scheduling Request. |

Option 3: configured LCGs that have data available for transmission.
A modification to the standard may be as shown in Table 5.

**Table 5**

| | | |
|---|---|---|
| If there is at least one DSR pending, the MAC entity shall: | | |
| | 1> if UL-SCH resources are available for a new transmission and the UL-SCH resources can accommodate the DSR MAC CE plus its subheader as a result of logical channel prioritization: | |
| | | 2> instruct the Multiplexing and Assembly procedure to generate the DSR MAC CE **including all LCGs which have data available for transmission**; |
| | 1> else if there is no pending SR already triggered by the DSR procedure for the same logical channel as of this DSR: | |
| | | 2> trigger a Scheduling Request. |

Option 4: configured LCGs which are configured with delay status reporting and have data available for transmission.
A modification to the standard may be as shown in Table 6.

**Table 6**

| | | |
|---|---|---|
| If there is at least one DSR pending, the MAC entity shall: | | |
| | 2> if UL-SCH resources are available for a new transmission and the UL-SCH resources can accommodate the DSR MAC CE plus its subheader as a result of logical channel prioritization: | |
| | | 2> instruct the Multiplexing and Assembly procedure to generate the DSR MAC CE **including all LCGs which are configured with delay status reporting and have data available for transmission**; |
| | 1> else if there is no pending SR already triggered by the DSR procedure for the same logical channel as of this DSR: | |
| | | 2> trigger a Scheduling Request. |

Option 5: logical channel groups configured with delay status reporting and having a remaining time below a configured threshold, or a logical channel group configured with delay status reporting and for which a delay status report is triggered, or a logical channel group configured with delay status reporting and having a pending delay status report, wherein the configured threshold may be, for example, may be configured by a parameter remainingTimeThreshold.
A modification to the standard may be as shown in Table 7.

**Table 7**

| | | |
|---|---|---|
| If there is at least one DSR pending, the MAC entity shall: | | |
| | 1> if UL-SCH resources are available for a new transmission and the UL-SCH resources can accommodate the DSR MAC CE plus its subheader as a result of logical channel prioritization: | |
| | | 2> instruct the Multiplexing and Assembly procedure to generate the DSR MAC CE **including all LCGs for which DSRs have been triggered;** |
| | 1> else if there is no pending SR already triggered by the DSR procedure for the same logical channel as of this DSR: | |
| | | 2> trigger a Scheduling Request. |

Option 6: a logical channel group for which the delay status report is triggered in operation 301 or a logical channel group to which the delay status report corresponds.
A modification to the standard may be as shown in Table 8.

**Table 8**

| | | |
|---|---|---|
| If there is at least one DSR pending, the MAC entity shall: | | |
| | 1> if UL-SCH resources are available for a new transmission and the UL-SCH resources can accommodate the DSR MAC CE plus its subheader as a result of logical channel prioritization: | |
| | | 2> instruct the Multiplexing and Assembly procedure to generate the DSR MAC CE **including the LCG for which the DSR is triggered;** |
| | 1> else if there is no pending SR already triggered by the DSR procedure for the same logical channel as of this DSR: | |
| | | 2> trigger a Scheduling Request. |

Option 7: a logical channel group having pending data after a media access control protocol data unit (MAC PDU) containing a delay status report media access control control element (DSR MAC CE) is assembled (not all the SDUs associated with the DSR for this LCG(s) are included in the MAC PDU of this DSR MAC CE).
A modification to the standard may be as shown in Table 9.

**Table 9**

| | | |
|---|---|---|
| If there is at least one DSR pending, the MAC entity shall: | | |
| 1> if UL-SCH resources are available for a new transmission and the UL-SCH resources can accommodate the DSR MAC CE plus its subheader as a result of logical channel prioritization: | | |
| | | 2> instruct the Multiplexing and Assembly procedure to generate the DSR MAC CE **including all LCGs which have data available for transmission after the assembly of the MAC PDU**; |
| | 1> else if there is no pending SR already triggered by the DSR procedure for the same logical channel as of this DSR: | |
| | | 2> trigger a Scheduling Request. |

In some embodiments of operation 302, the terminal equipment may report the delay information for a logical channel group in the at least one logical channel group with a remaining time of pending data less than or equal to a predetermined value. The predetermined value is, for example, 64 ms. The remaining time includes a shortest remaining value of a packet data convergence protocol discard timer (PDCP discardTimer) of the pending data in the logical channel group.

In Options 2, 4 and 5 above, the logical channel group configured with delay status reporting may be: an ID of the logical channel group is included in a radio resource control (RRC) message (such as an LCG-DSR-Config IE in the RRC message), and/or the logical channel group is configured with a remaining time threshold (remainingTimeThreshold) parameter.

In Options 1 to 7 above, in some embodiments, the pending data or buffered data in the logical channel group may include data of packet data convergence protocol (PDCP) layers and/or data of radio link control (RLC) layers to which all logical channels in the logical channel group correspond. For example, as least one of the following data may be included: a packet data convergence protocol service data unit (PDCP SDU), a packet data convergence protocol protocol data unit (PDCP PDU), a radio link control service data unit (RLC SDU), a radio link control service data unit (RLC SDU) segment, a radio link control protocol data unit (RLC PDU), or delay-critical data. The delay-critical data are, for example, all service data units (SDUs) associated with the delay status report (DSR).

In this disclosure, the terminal equipment may generate a delay status report media access control control element (DSR MAC CE), and report delay information for at least one logical channel group (LCG) by transmitting the DSR MAC CE, so as to implement operation 302.

In some embodiments, the DSR MAC CE may include a logical channel group field (LCGi). In operation 302, the terminal equipment reports delay information for the logical channel group with a logical channel group field (LCGi) set to 1, as shown in Table 10 below.

**Table 10**

| |
|---|
| The LCGi field set to 1 indicates that the delay information for the LCG i is reported. |

In some embodiments, the DSR MAC CE may further include a remaining time field and/or a buffer size field to which the logical channel group that is reported the delay information by the terminal equipment corresponds. In addition, the DSR MAC CE may include a BT field, which may indicate a BS table used by the buffer size.

For the value indicated by the remaining time field, following option A or B or C may be used in this disclosure, so as to solve problem 2 above. In following option A or B or C, "the logical channel group" refers to the logical channel group to which the delay information is reported by the terminal equipment, that is, a logical channel group corresponding to the remaining time field of the DSR MAC CE.

Option A: if the logical channel group does not have a buffered packet data convergence protocol service data unit (PDCP SDU) or the buffer size field to which the logical channel group corresponds is a first value (for example, the first value is 0), the remaining time field to which the logical channel group corresponds is reserved or indicates a predetermined value, for example, the predetermined value is 0, or 63, or another value.

For example, a modification to the standard by option A may be as shown in Table 11 or Table 12.

**Table 11**

| |
|---|
| - Remaining Time: This field indicates the shortest remaining value of PDCP *discardTimer* (described in clause 7.3 in TS 38.323 [4]) among all PDCP SDUs buffered for an LCG if |
| there are PDCP SDUs buffered in the LCG, at the time of the first symbol of the first PUSCH transmission that includes this DSR MAC CE; otherwise, this field is reserved. The length of this field is 6 bits. The value *r* in this field indicates a remaining time within the range of (*r*, *r* + 1] msec. |

**Table 12**

| |
|---|
| - Remaining Time: This field indicates the shortest remaining value of PDCP *discardTimer* (described in clause 7.3 in TS 38.323 [4]) among all PDCP SDUs buffered for an LCG if there are PDCP SDUs buffered in the LCG, at the time of the first symbol of the first PUSCH transmission that includes this DSR MAC CE; otherwise, this field is reserved. The length of this field is 6 bits. The value *r* in this field indicates a remaining time within the range of (*r*, *r* + 1] msec. |

Option B: the remaining time field to which the logical channel group corresponds indicates: a shortest remaining value of a packet data convergence protocol discard timer (PDCP discardTimer) among all packet data convergence protocol service data units (PDCP SDUs) buffered for the logical channel group but not yet transmitted or among all packet data convergence protocol service data units (PDCP SDUs) included in a media access control protocol data unit (MAC PDU).

For example, a modification to the standard by option B may be as shown in Table 13.

**Table 13**

| |
|---|
| - Remaining Time: This field indicates the shortest remaining value of PDCP *discardTimer* (described in clause 7.3 in TS 38.323 [4]) among all PDCP SDUs buffered but not transmitted/included in a MAC PDU for an LCG, at the time of the first symbol of the first PUSCH transmission that includes this DSR MAC CE. The length of this field is 6 bits. The value *r* in this field indicates a remaining time within the range of (*r*, *r* + 1] msec. |

Option C: the remaining time field to which the logical channel group corresponds indicates:
a shortest remaining value of a packet data convergence protocol (PDCP) discard timer among all packet data convergence protocol service data units (PDCP SDUs) before a media access control protocol data unit (MAC PDU) is built or among all packet data convergence protocol service data units (PDCP SDUs) buffered for the logical channel group when the delay status report (DSR) is triggered.

In Option C, "built" may also be expressed as "assembled", "generated" or "obtained", which have the same meaning in this disclosure, and may be interchangeable.

For example, a modification to the standard by option C may be as shown in Table 14.

**Table 14**

| |
|---|
| - Remaining Time: This field indicates the shortest remaining value of PDCP *discardTimer* (described in clause 7.3 in TS 38.323 [4]) among all PDCP SDUs buffered for an LCG_ before the MAC PDU has been built, at the time of the first symbol of the first PUSCH transmission that includes this DSR MAC CE. The length of this field is 6 bits. The value *r* in this field indicates a remaining time within the range of (*r*, *r* + 1] msec. |

The method for reporting which LCGs in a delay status report (DSR) by a terminal equipment and a method for indicating a remaining time are provided in the embodiments of the first aspect of this disclosure. This is helpful to determine behaviors of the terminal equipment, so that the network device and the terminal equipment have consistent understanding of the delay information, which is simple to implement, and has relatively small impact on standards.

### Embodiments of a second aspect

Radio resource control (RRC) signaling may control a delay status report (DSR) procedure by configuring a remainingTimeThreshold parameter. This parameter is a threshold for use by an LCG to trigger a remaining time of the DSR.

If an LCG is configured for delay status reporting, a remaining value of a smallest packet data convergence protocol discard timer (PDCP discardTimer) in all uplink data buffered for the LCG is below remaningTimeThreshold, and if the LCG has no pending delay status report (DSR) since a last transmission of a delay status report media access control control element (DSR MAC CE), the DSR is triggered for the LCG. As shown in Table 15 below.

**Table 15**

| | | |
|---|---|---|
| If an LCG is configured for delay status reporting, the MAC entity shall: | | |
| | 1> if the smallest remaining value of the PDCP *discardTimers* among all the data buffered for the LCG that has not been transmitted in any MAC PDU or reported as data volume in a DSR MAC CE becomes below *remainingTimeThreshold* of the LCG; and | |
| | 1> if there is no DSR pending for the LCG since the last transmission of a DSR MAC CE: | |
| | | 2> trigger a DSR for the LCG. |

If there is at least one pending DSR, if there are uplink scheduling channel (UL-SCH) resources available for new transmission and the UL-SCH resources are able to accommodate a DSR MAC CE plus its sub-header after logical channel prioritization (LCP), a DSR MAC CE is generated.

FIG. 4 is a schematic diagram of triggering a DSR based on the related art.

As shown in FIG. 4, according to the related art, assuming that DSR1 is triggered for LCG1 in the terminal equipment, if there are UL-SCH resources available for new transmission and the UL-SCH resources are able to accommodate a DSR MAC CE sub-header after logical channel prioritization (LCP), a DSR MAC CE is generated, which reports delay information related to LCG1. The MAC PDU that the terminal equipment transmits in the UL-SCH resources includes the DSR MAC CE, that is, the DSR MAC CE is transmitted in the UL-SCH resources.

Before the DSR MAC CE is transmitted in the UL-SCH resources (after the DSR MAC CE is generated), the terminal equipment may trigger DSR2 for LCG2, hence, DSR2 is unable to be included in the DSR MAC CE.

After the DSR MAC CE is transmitted, DSR1 is cancelled. As the remaining value of the smallest PDCP discardTimer in all the buffered uplink data in LCG2 may possibly still be below remaningTimeThreshold, and there is no pending DSR for LCG2 after the last transmission of a DSR MAC CE, an unnecessary DSR is triggered for LCG2, i.e., DSR3 is triggered for LCG2.

In order to solve the above problems, the embodiments of the second aspect of this disclosure provide a method for triggering a delay status report. The method is applicable to a terminal equipment, such as the terminal equipment 102 shown in FIG. 1.

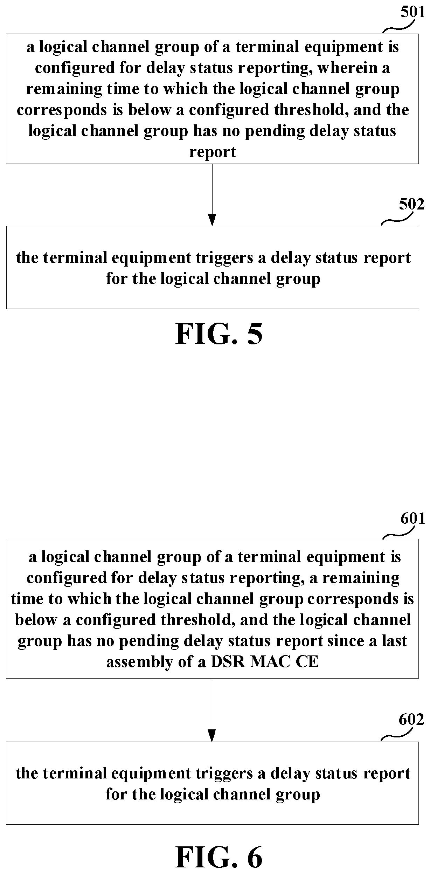

FIG. 5 is a schematic diagram of the method for triggering a delay state report in the embodiments of the second aspect. As shown in FIG. 5, the method for triggering a delay status report includes:
operation 501: a logical channel group of a terminal equipment is configured for delay status reporting, wherein a remaining time to which the logical channel group corresponds is below a configured threshold, and the logical channel group has no pending delay status report; and
operation 502: the terminal equipment triggers a delay status report for the logical channel group.

For example, operations 501 and 502 may be as shown in Table 16 below, that is, "since the last transmission of a DSR MAC CE" in Table 15 is cancelled to become Table 16.

**Table 16**

| | | |
|---|---|---|
| If an LCG is configured for delay status reporting, the MAC entity shall: | | |
| | 1> if the smallest remaining value of the PDCP *discardTimers* among all the data buffered for the LCG that has not been transmitted in any MAC PDU or reported as data volume in a DSR MAC CE becomes below *remainingTimeThreshold* of the LCG; and | |
| | 1> if there is no DSR pending for the LCG: | |
| | | 2> trigger a DSR for the LCG. |

FIG. 6 is another schematic diagram of the method for triggering a delay state report in the embodiments of the second aspect. As shown in FIG. 6, the method for triggering a delay state report includes:
operation 601: a logical channel group of a terminal equipment is configured for delay status reporting, wherein a remaining time to which the logical channel group corresponds is below a configured threshold, and the logical channel group has no pending delay status report since a last assembly of a delay status report media access control control element (DSR MAC CE); and
operation 602: the terminal equipment triggers a delay status report for the logical channel group.

For example, operations 601 and 602 may be as shown in Table 17 below, that is, "since the last transmission of a DSR MAC CE" in Table 15 is modified into "since the last assembly of a DSR MAC CE" to become Table 17.

**Table 17**

| | | |
|---|---|---|
| If an LCG is configured for delay status reporting, the MAC entity shall: | | |
| | 1> if the smallest remaining value of the PDCP *discardTimers* among all the data buffered for the LCG that has not been transmitted in any MAC PDU or reported as data volume in a DSR MAC CE becomes below *remainingTimeThreshold* of the LCG; and | |
| | 1> if there is no DSR pending for the LCG since the last assembly of a DSR MAC CE: | |
| | | 2> trigger a DSR for the LCG. |

In operation 601, assembly may also be represented as building or generation or obtaining, etc., which have the same meaning in this disclosure, and may be interchangeable.

According to the embodiments of the second aspect, unnecessarily triggering a delay status report again for the same LCG again may be avoided, and processing of the terminal equipment may be simplified.

### Embodiments of a third aspect

In the related art, a MAC PDU includes at most one DSR MAC CE. If a MAC PDU is able to accommodate SDUs with which all pending DSRs are associated, the MAC does not include a DSR MAC CE in the MAC PDU.

After a DSR is triggered, it is deemed as being pending until it is canceled. When all SDUs associated with a pending DSR are discarded, or when a MAC PDU is transmitted and the MAC PDU includes all SDUs with which a pending DSR is associated or includes a DSR MAC CE (which contains delay information of all SDUs associated with the pending DSR), the MAC entity cancels the pending DSR, as shown in Table 18.

**Table 18**

| |
|---|
| A MAC PDU shall contain at most one DSR MAC CE. The MAC entity shall not include a DSR MAC CE in a MAC PDU if the MAC PDU can accommodate the SDUs associated with all the pending DSRs. |
| After a DSR is triggered, it is considered as pending until it is cancelled. The MAC entity shall cancel a pending DSR, either when all the SDUs associated with the DSR have been discarded, or when a MAC PDU is transmitted and this MAC PDU includes either all the SDUs associated with the DSR or a DSR MAC CE that contains the delay information of all the SDUs associated with the DSR (as described in the clause 6.1.3.x). |

According to Table 18, if LCG1 has emergency data SDU1, DSR1 is triggered, and if LCG2 has emergency data SDU2, DSR2 is triggered.

Following problems exist in the related art: if the emergency data SDU1 of LCG1 is included in the MAC PDU and the DSR MAC CE included in the MAC PDU further includes delay information for LCG1, uplink resources are unnecessarily occupied, because all emergency data of LCG1 have already been transmitted. That is, if a MAC PDU is able to include all SDUs with which a DSR is associated, i.e., the LCG that triggers the DSR has no urgent data waiting for being transmitted, and the delay information for the LCG is still reported in the DSR MAC CE included in the MAC PDU, a length of the DSR MAC CE is increased, and overhead of uplink resources is unreasonably occupied.

In order to solve the above problems, the embodiments of the third aspect of this disclosure provide a method for canceling a delay status report. This method is applicable to a terminal equipment, such as the terminal equipment 102 shown in FIG. 1.

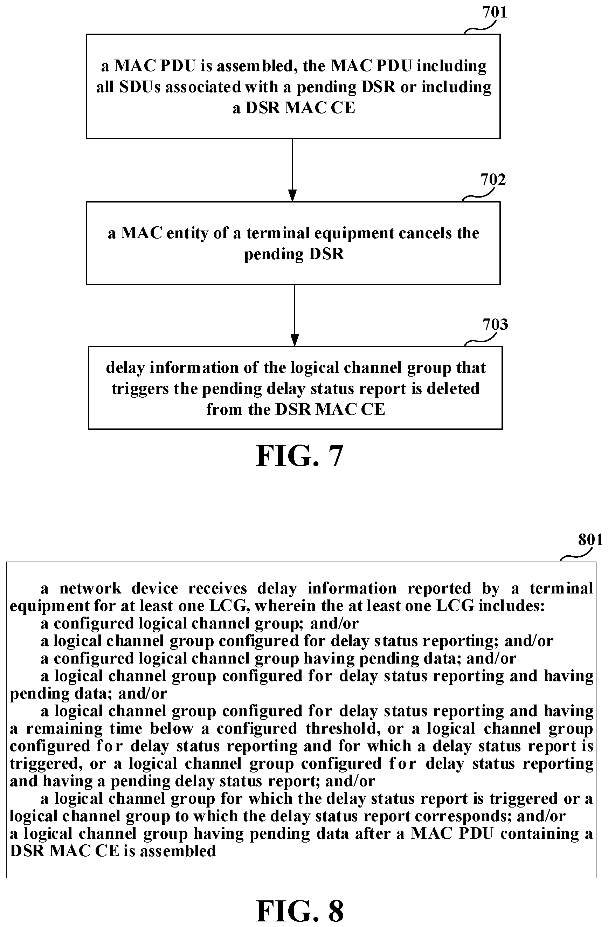

FIG. 7 is a schematic diagram of the method for canceling a delay status report in the embodiments of the third aspect. As shown in FIG. 7, the method for cancelling a delay status report includes:
operation 701: a media access control protocol data unit (MAC PDU) is assembled, the media access control protocol data unit (MAC PDU) including all service data units (SDUs) associated with a pending delay status report (DSR) or including a delay status report media access control control element (DSR MAC CE); and
operation 702: a media access control (MAC) entity of a terminal equipment cancels the pending delay status report (DSR).

In operation 701, assembled may also be represented as built or generated or obtained, etc., which have the same meaning in this disclosure, and may be interchangeable.

According to operations 701 and 702, when a MAC PDU is assembled and includes all SDUs associated with a DSR (i.e., the assembled MAC PDU includes SDU1 and a DSR MAC CE), the DSR is cancelled.

Furthermore, as shown in FIG. 7, the method may include:
operation 703: delay information for the logical channel group that triggers the pending delay status report is deleted from the delay status report media access control control element (DSR MAC CE).

With operation 703, the DSR MAC CE may no longer include the delay information for the LCG that triggers the DSR.

Modifications to the standards by the embodiments of the third aspect are as shown in Table 19.

**Table 19**

| |
|---|
| The MAC entity shall cancel a pending DSR, either when all the SDUs associated with the DSR have been discarded, or when a MAC PDU is transmitted/assembled (built, generated, obtained) and this MAC PDU includes either all the SDUs associated with the DSR or a DSR MAC CE that contains the delay information of all the SDUs associated with the DSR (as described in the clause 6.1.3.x). |

According to the embodiments of the third aspect, if a MAC PDU is able to include all SDUs with which a DSR is associated, by not reporting the delay information for the LCG that triggers the DSR in the DSR MAC CE, the length of the DSR MAC CE may be reduced, thereby saving overhead of uplink resources.

### Embodiments of a fourth aspect

The embodiments of the fourth aspect provide a method for receiving delay information. This method is applicable to a network device, such as the network device 101 in FIG. 1. Reference may be made to the description of the embodiments of the first, second and third aspects for parts in the embodiments of the fourth aspect identical to those in the embodiments of the first, second and third aspects, which shall not be repeated herein any further.

FIG. 8 is a schematic diagram of the method for receiving delay information of the embodiments of the fourth aspect. As shown in FIG. 8, the method includes:
operation 801: a network device receives delay information reported by a terminal equipment for at least one logical channel group (LCG), wherein the at least one logical channel group (LCG) includes:
a configured logical channel group; and/or
a logical channel group configured for delay status reporting; and/or
a configured logical channel group having pending data; and/or
a logical channel group configured for delay status reporting and having pending data; and/or
a logical channel group configured for delay status reporting and having a remaining time below a configured threshold, or a logical channel group configured for delay status reporting and for which a delay status report is triggered, or a logical channel group configured for delay status reporting and having a pending delay status report; and/or
a logical channel group for which the delay status report is triggered or a logical channel group to which the delay status report corresponds; and/or
a logical channel group having pending data after a media access control protocol data unit (MAC PDU) containing a delay status report media access control control element (DSR MAC CE) is assembled.

In at least one embodiment, the network device receives delay information reported by the terminal equipment to logical channel group in the at least one logical channel group with a remaining time of the pending data that is less than or equal to a predetermined value.

In at least one embodiment, the remaining time includes a shortest remaining value of a packet data convergence protocol (PDCP) discard timer of the pending data in the logical channel group.

In at least one embodiment, for the logical channel group configured for delay status reporting, a radio resource control (RRC) message includes an ID of the logical channel group, and/or the logical channel group is configured with a remaining time threshold (remainingTimeThreshold) parameter.

In at least one embodiment, the pending data include data of packet data convergence protocol (PDCP) layers and/or data of radio link control (RLC) layers to which all logical channels in the logical channel group correspond. For example, as least one of the following data may be included:
a packet data convergence protocol service data unit (PDCP SDU), a packet data convergence protocol protocol data unit (PDCP PDU), a radio link control service data unit (RLC SDU), a radio link control service data unit (RLC SDU) segment, a radio link control protocol data unit (RLC PDU), or delay-critical data.

In at least one embodiment, a delay status report media access control control element (DSR MAC CE) generated by the terminal equipment includes a logical channel group field, wherein the network device receives the delay information for the logical channel group with the logical channel group field that is set to 1.

In at least one embodiment, the delay status report media access control control element (DSR MAC CE) further includes a remaining time field and/or a buffer size field to which the logical channel group corresponds. In addition, the DSR MAC CE may include a BT field, which may indicate a BS table used by the buffer size.

In at least one embodiment, the logical channel group does not have a buffered packet data convergence protocol service data unit (PDCP SDU) or the buffer size field to which the logical channel group corresponds is a first value (such as 0), and the remaining time field to which the logical channel group corresponds is reserved or indicates a predetermined value.

In at least one embodiment, the remaining time field to which the logical channel group corresponds indicates:
a shortest remaining value of a packet data convergence protocol discard timer (PDCP discardTimer) among all packet data convergence protocol service data units (PDCP SDUs) buffered for the logical channel group but not yet transmitted or among all packet data convergence protocol service data units (PDCP SDUs) included in a media access control protocol data unit (MAC PDU).

In at least one embodiment, the remaining time field to which the logical channel group corresponds indicates:
a shortest remaining value of a packet data convergence protocol discard timer (PDCP discardTimer) among all packet data convergence protocol service data units (PDCP SDUs) before a media access control protocol data unit (MAC PDU) is built or among all packet data convergence protocol service data units (PDCP SDUs) buffered for the logical channel group when the delay status report (DSR) is triggered.

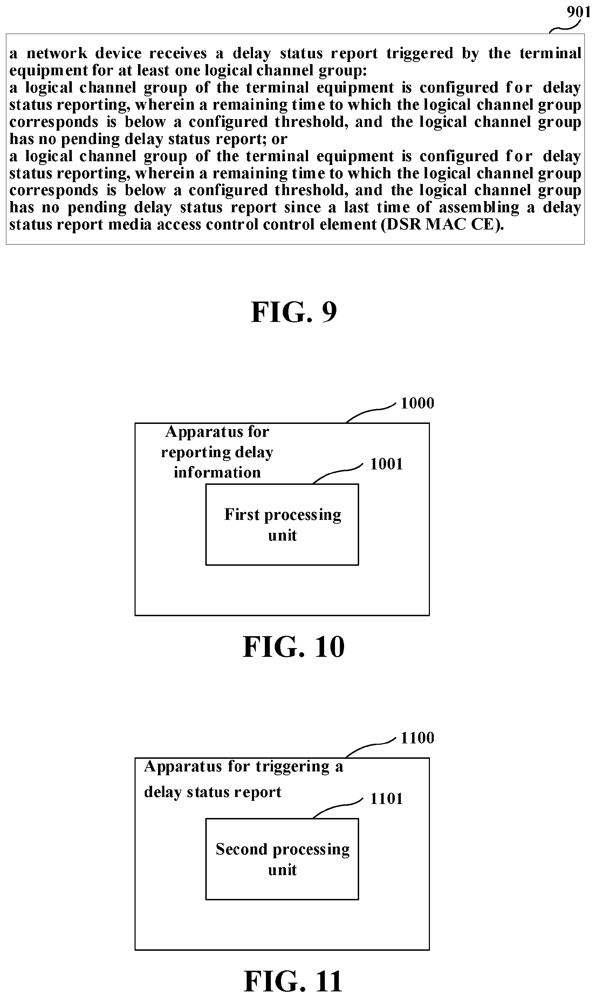

FIG. 9 is another schematic diagram of the method for receiving delay information of the embodiments of the fourth aspect. As shown in FIG. 9, the method includes:
operation 901: a network device receives a delay status report triggered by the terminal equipment for at least one logical channel group, wherein,
a logical channel group of the terminal equipment is configured for delay status reporting, wherein a remaining time to which the logical channel group corresponds is below a configured threshold, and the logical channel group has no pending delay status report; or
a logical channel group of the terminal equipment is configured for delay status reporting, wherein a remaining time to which the logical channel group corresponds is below a configured threshold, and the logical channel group has no pending delay status report since a last time of assembling a delay status report media access control control element (DSR MAC CE).

### Embodiments of a fifth aspect

The embodiments of the fifth aspect of this disclosure provide an apparatus for reporting delay information, applicable to a terminal equipment.

FIG. 10 is a schematic diagram of the apparatus for reporting delay information of the embodiments of the fifth aspect, corresponding to the embodiments of the first aspect. As shown in FIG. 10, an apparatus 1000 for reporting delay information includes a first processing unit 1001.

The first processing unit 1001 causes the terminal equipment to perform following operations:
triggering at least one delay status report (DSR) by the terminal equipment; and
reporting delay information for at least one logical channel group (LCG) by the terminal equipment.

In some embodiments, the at least one LCG includes:
a configured logical channel group; and/or
a logical channel group configured for delay status reporting; and/or
a configured logical channel group having pending data; and/or
a logical channel group configured for delay status reporting and having pending data; and/or
a logical channel group configured for delay status reporting and having a remaining time below a configured threshold, or a logical channel group configured for delay status reporting and for which a delay status report is triggered, or a logical channel group configured for delay status reporting and having a pending delay status report; and/or
a logical channel group for which the delay status report is triggered or a logical channel group to which the delay status report corresponds; and/or
a logical channel group having pending data after a media access control protocol data unit (MAC PDU) containing a delay status report media access control control element (DSR MAC CE) is assembled.

In some embodiments, the terminal equipment reports the delay information for a logical channel group in which a remaining time of the pending data is less than or equal to a predetermined value in the at least one logical channel group.

In some embodiments, the remaining time includes a shortest remaining value of a packet data convergence protocol (PDCP) discard timer of the pending data in the logical channel group.

In some embodiments, for the logical channel group configured for delay status reporting, a radio resource control (RRC) message includes an identifier (ID) of the logical channel group, and/or the logical channel group is configured with a remaining time threshold (remainingTimeThreshold) parameter.

In some embodiments, the pending data include data of packet data convergence protocol (PDCP) layers and/or data of radio link control (RLC) layers to which all logical channels in the logical channel group correspond. For example, as least one of the following data may be included:
a packet data convergence protocol service data unit (PDCP SDU), a packet data convergence protocol protocol data unit (PDCP PDU), a radio link control service data unit (RLC SDU), a radio link control service data unit (RLC SDU) segment, a radio link control protocol data unit (RLC PDU), or delay-critical data.

In some embodiments, the terminal equipment generates a delay status report media access control control element (DSR MAC CE).

In some embodiments, the delay status report media access control control element (DSR MAC CE) includes a logical channel group field, wherein the terminal equipment reports the delay information for the logical channel group with the logical channel group field that is set to 1.

In some embodiments, the delay status report media access control control element (DSR MAC CE) includes a remaining time field and/or a buffer size field to which the logical channel group corresponds. In addition, the DSR MAC CE may include a BT field, which may indicate a BS table used by the buffer size.

In some embodiments, the logical channel group does not have a buffered packet data convergence protocol service data unit (PDCP SDU) or the buffer size field to which the logical channel group corresponds is a first value (0),
and the remaining time field to which the logical channel group corresponds is reserved or indicates a predetermined value.

In some embodiments, the remaining time field to which the logical channel group corresponds indicates:
a shortest remaining value of a packet data convergence protocol discard timer (PDCP discardTimer) among all packet data convergence protocol service data units (PDCP SDUs) buffered for the logical channel group but not yet transmitted or among all packet data convergence protocol service data units (PDCP SDUs) included in a media access control protocol data unit (MAC PDU).

In some embodiments, the remaining time field to which the logical channel group corresponds indicates:
a shortest remaining value of a packet data convergence protocol discard timer (PDCP discardTimer) among all packet data convergence protocol service data units (PDCP SDUs) before a media access control protocol data unit (MAC PDU) is built or among all packet data convergence protocol service data units (PDCP SDUs) buffered for the logical channel group when the delay status report (DSR) is triggered.

FIG. 11 is a schematic diagram of an apparatus for triggering a delay status report of the embodiments of the fifth aspect, corresponding to the embodiments of the second aspect. As shown in FIG. 11, an apparatus 1100 for triggering a delay status report includes a second processing unit 1101.

The second processing unit 1101 causes the terminal equipment to perform following operations:
configuring a logical channel group of the terminal equipment for delay status reporting, wherein a remaining time to which the logical channel group corresponds is below a configured threshold, and the logical channel group has no pending delay status report since last assembly of a delay status report media access control control element (DSR MAC CE); and
triggering a delay status report for the logical channel group.

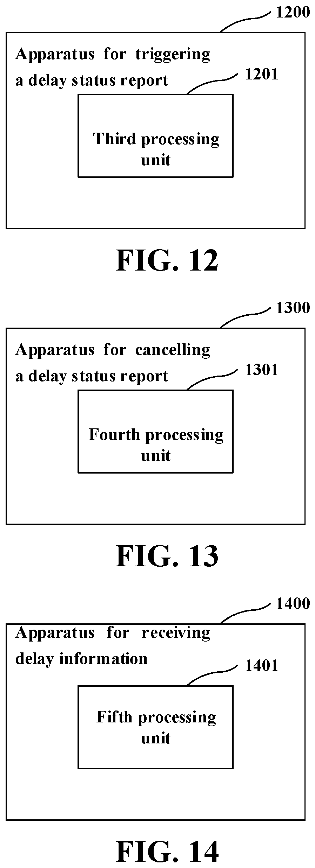

FIG. 12 is another schematic diagram of the apparatus for triggering a delay status report of the embodiments of the fifth aspect, corresponding to the embodiments of the second aspect. As shown in FIG. 12, an apparatus 1200 for triggering a delay status report includes a third processing unit 1201.

The third processing unit 1201 causes the terminal equipment to perform following operations:
configuring a logical channel group of the terminal equipment for delay status reporting, wherein a remaining time to which the logical channel group corresponds is below a configured threshold, and the logical channel group has no pending delay status report since last assembly of a delay status report media access control control element (DSR MAC CE); and
triggering a delay status report for the logical channel group by the terminal equipment.

FIG. 13 is a schematic diagram of an apparatus for cancelling a delay status report of the embodiments of the fifth aspect, corresponding to the embodiments of the third aspect. As shown in FIG. 13, an apparatus 1300 for cancelling a delay status report includes a fourth processing unit 1301.

The fourth processing unit 1301 causes the terminal equipment to perform following operations:
assembling a media access control protocol data unit (MAC PDU), the media access control protocol data unit (MAC PDU) including all service data units (SDUs) associated with a pending delay status report (DSR) or including a delay status report media access control control element (DSR MAC CE); and
cancelling the pending delay status report (DSR) by a media access control (MAC) entity of the terminal equipment.

In some embodiments, the fourth processing unit 1301 further causes the terminal equipment to perform following operations:
deleting the delay information for the logical channel group that triggers the pending delay status report from the delay status report media access control control element (DSR MAC CE).

### Embodiments of a sixth aspect

The embodiments of the sixth aspect of this disclosure provide an apparatus for receiving delay information, applicable to a network device.

FIG. 14 is a schematic diagram of the apparatus for receiving delay information of the embodiments of the sixth aspect, corresponding to the embodiments of the fourth aspect. As shown in FIG. 14, an apparatus 1400 for receiving delay information includes a fifth processing unit 1401.

The fifth processing unit 1401 causes the network device to perform following operations:
receiving delay information reported by a terminal equipment for at least one logical channel group (LCG), wherein the at least one logical channel group (LCG) includes:
a configured logical channel group; and/or
a logical channel group configured for delay status reporting; and/or
a configured logical channel group having pending data; and/or
a logical channel group configured for delay status reporting and having pending data; and/or
a logical channel group configured for delay status reporting and having a remaining time below a configured threshold, or a logical channel group configured for delay status reporting and for which a delay status report is triggered, or a logical channel group configured for delay status reporting and having a pending delay status report; and/or
a logical channel group for which the delay status report is triggered or a logical channel group to which the delay status report corresponds; and/or
a logical channel group having pending data after a media access control protocol data unit (MAC PDU) containing a delay status report media access control control element (DSR MAC CE) is assembled.

In some embodiments, the network device receives delay information reported by the terminal equipment to logical channel group in the at least one logical channel group with a remaining time of the pending data that is less than or equal to a predetermined value.

In some embodiments, the remaining time includes a shortest remaining value of a packet data convergence protocol (PDCP) discard timer of the pending data in the logical channel group.

In some embodiments, for the logical channel group configured for delay status reporting, a radio resource control (RRC) message includes an ID of the logical channel group, and/or the logical channel group is configured with a remaining time threshold (remainingTimeThreshold) parameter.

In some embodiments, the pending data include data of packet data convergence protocol (PDCP) layers and/or data of radio link control (RLC) layers to which all logical channels in the logical channel group correspond. For example, as least one of the following data may be included:
a packet data convergence protocol service data unit (PDCP SDU), a packet data convergence protocol protocol data unit (PDCP PDU), a radio link control service data unit (RLC SDU), a radio link control service data unit (RLC SDU) segment, a radio link control protocol data unit (RLC PDU), or delay-critical data.

In some embodiments, a delay status report media access control control element (DSR MAC CE) generated by the terminal equipment includes a logical channel group field, wherein the network device receives the delay information for the logical channel group with the logical channel group field that is set to 1.

In some embodiments, the delay status report media access control control element (DSR MAC CE) further includes a remaining time field and/or a buffer size field to which the logical channel group corresponds. In addition, the DSR MAC CE may include a BT field, which may indicate a BS table used by the buffer size.

In some embodiments, the logical channel group does not have a buffered packet data convergence protocol service data unit (PDCP SDU) or the buffer size field to which the logical channel group corresponds is a first value (0), and the remaining time field to which the logical channel group corresponds is reserved or indicates a predetermined value.

In some embodiments, the remaining time field to which the logical channel group corresponds indicates:
a shortest remaining value of a packet data convergence protocol discard timer (PDCP discardTimer) among all packet data convergence protocol service data units (PDCP SDUs) buffered for the logical channel group but not yet been transmitted or among all packet data convergence protocol service data units (PDCP SDUs) included in a media access control protocol data unit (MAC PDU).

In some embodiments, the remaining time field to which the logical channel group corresponds indicates:
a shortest remaining value of a packet data convergence protocol discard timer (PDCP discardTimer) among all packet data convergence protocol service data units (PDCP SDUs) before a media access control protocol data unit (MAC PDU) is built or among all packet data convergence protocol service data units (PDCP SDUs) buffered for the logical channel group when the delay status report (DSR) is triggered.

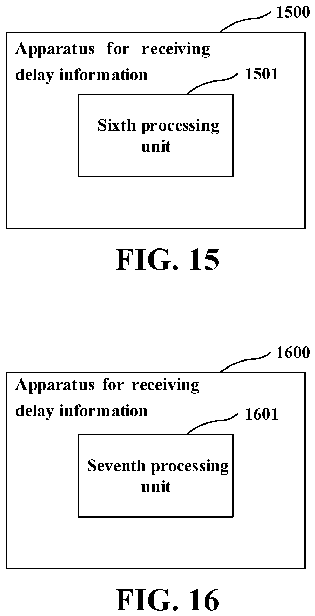

FIG. 15 is another schematic diagram of the apparatus for receiving delay information of the embodiments of the sixth aspect, corresponding to the embodiments of the fourth aspect. As shown in FIG. 15, an apparatus 1500 for receiving delay information includes a sixth processing unit 1501.

The sixth processing unit 1501 causes the network device to perform following operations:
receiving a delay status report triggered by the terminal equipment for at least one logical channel group, wherein a logical channel group of the terminal equipment is configured for delay status reporting, wherein a remaining time to which the logical channel group corresponds is below a configured threshold, and the logical channel group has no pending delay status report.

FIG. 16 is a further schematic diagram of the apparatus for receiving delay information of the embodiments of the sixth aspect, corresponding to the embodiments of the fourth aspect. As shown in FIG. 16, an apparatus 1600 for receiving delay information includes a seventh processing unit 1601.

The seventh processing unit 1601 causes the network device to perform following operations:
receiving a delay status report triggered by the terminal equipment for at least one logical channel group, wherein a logical channel group of the terminal equipment is configured for delay status reporting, wherein a remaining time to which the logical channel group corresponds is below a configured threshold, and the logical channel group has no pending delay status report since a last time of assembling a delay status report media access control control element (DSR MAC CE).

### Embodiments of a seventh aspect

The embodiments of the seventh aspect of this disclosure provide a communication system, including a network device and a terminal equipment

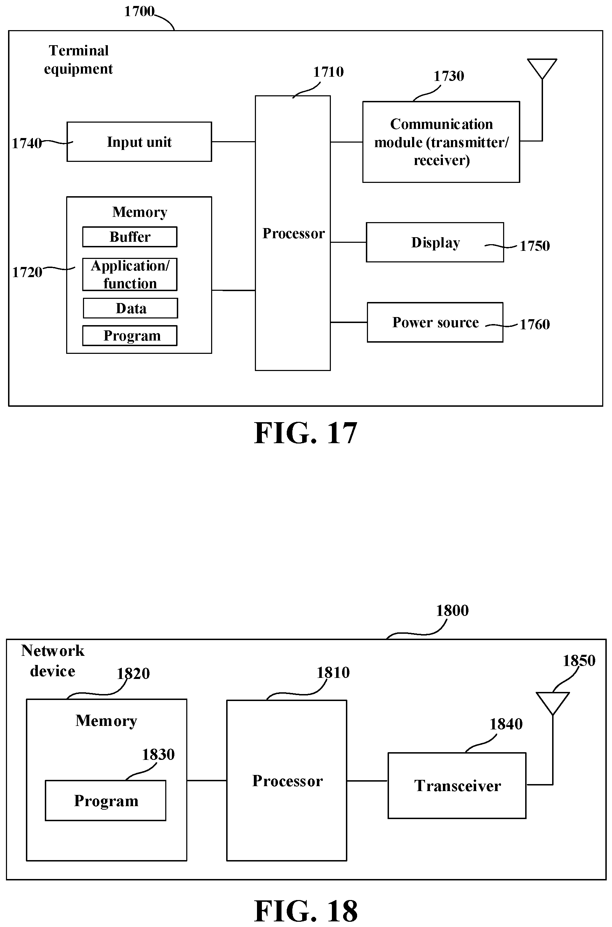

FIG. 17 is a schematic diagram of the terminal equipment of the embodiments of the seventh aspect of this disclosure. As shown in FIG. 17, a terminal equipment 1700 (such as corresponding to the terminal equipment 102 in FIG. 1) may include a processor 1710 and a memory 1720, the memory 1720 storing data and a program and being coupled to the processor 1710. It should be noted that this figure is illustrative only, and other types of structures may also be used, so as to supplement or replace this structure and achieve a telecommunications function or other functions.

For example, the processor 1710 may be configured to execute a program to carry out the methods described in the embodiments of the first, second and third aspects.

As shown in FIG. 17, the terminal equipment 1700 may further include a communication module 1730, an input unit 1740, a display 1750, and a power supply 1760, wherein functions of the above components are similar to those in the related art, which shall not be described herein any further. It should be noted that the terminal equipment 1700 does not necessarily include all the parts shown in FIG. 17, and the above components are not necessary. Furthermore, the terminal equipment 1700 may include parts not shown in FIG. 17, and the related art may be referred to.

FIG. 18 is a schematic diagram of the network device of the embodiments of the seventh aspect of this disclosure. As shown in FIG. 18, a network device 1800 (such as corresponding to the network device 101 in FIG. 1) may include a processor 1810 (such as a central processing unit (CPU)) and a memory 1820, the memory 1820 being coupled to the processor 1810. The memory 1820 may store various data, and furthermore, it may store a program 1830 for information processing, and execute the program 1830 under control of the processor 1810.

For example, the processor 1810 may be configured to execute a program to carry out the method described in the embodiments of the second aspect.

Furthermore, as shown in FIG. 18, the network device 1800 may include a transceiver 1840, and an antenna 1850, etc., wherein functions of the above components are similar to those in the related art, and shall not be described herein any further. It should be noted that the network device 1800 does not necessarily include all the parts shown in FIG. 18, and furthermore, the network device 1800 may include parts not shown in FIG. 18, and the related art may be referred to.

Embodiments of this disclosure provide a computer readable program, which, when executed in a terminal equipment, causes the terminal equipment to carry out the method as described in the embodiments of the first aspect.

Embodiments of this disclosure provide a computer storage medium, including a computer readable program, which causes a terminal equipment to carry out the method as described in the embodiments of the first aspect.

Embodiments of this disclosure provide a computer readable program, which, when executed in a network device, causes the network device to carry out the method as described in the embodiments of the second aspect.

Embodiments of this disclosure provide a computer storage medium, including a computer readable program, which causes a network device to carry out the method as described in the embodiments of the second aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of this disclosure. Various variants and modifications may be made by those skilled in the art according to the spirits and principle of this disclosure, and such variants and modifications fall within the scope of this disclosure.

As to the implementations including the above embodiments, following supplements are further disclosed.
1. A method for triggering a delay status report, applicable to a terminal equipment, the method including:
   configuring a logical channel group of the terminal equipment for delay status reporting, wherein a remaining time to which the logical channel group corresponds is below a configured threshold, and the logical channel group has no pending delay status report; and
   triggering a delay status report for the logical channel group by the terminal equipment.
2. A method for cancelling a delay status report, applicable to a terminal equipment, the method including:
   assembling a media access control protocol data unit (MAC PDU), the media access control protocol data unit (MAC PDU) including all service data units (SDUs) associated with a pending delay status report (DSR) or including a delay status report media access control control element (DSR MAC CE); and
   cancelling the pending delay status report (DSR) by a media access control (MAC) entity of the terminal equipment.
3. The method according to supplement 2, wherein the method further includes:
   deleting the delay information for the logical channel group that triggers the pending delay status report from the delay status report media access control control element (DSR MAC CE).
4. A method for receiving delay information, applicable to a network device, the method including:
   receiving, by the network device, delay information reported by a terminal equipment for at least one logical channel group (LCG), wherein the at least one logical channel group (LCG) includes:
   a configured logical channel group; and/or
   a logical channel group configured for delay status reporting; and/or
   a configured logical channel group having pending data; and/or
   a logical channel group configured for delay status reporting and having pending data; and/or
   a logical channel group configured for delay status reporting and having a remaining time below a configured threshold, or a logical channel group configured for delay status reporting and for which a delay status report is triggered, or a logical channel group configured for delay status reporting and having a pending delay status report; and/or
   a logical channel group for which the delay status report is triggered or a logical channel group to which the delay status report corresponds; and/or
   a logical channel group having pending data after a media access control protocol data unit (MAC PDU) containing a delay status report media access control control element (DSR MAC CE) is assembled,
   wherein,
   a delay status report media access control control element (DSR MAC CE) generated by the terminal equipment includes a logical channel group field,
   wherein the network device receives the delay information for the logical channel group with the logical channel group field that is set to 1,
   and the delay status report media access control control element (DSR MAC CE) further includes a remaining time field and/or a buffer size field to which the logical channel group corresponds.
5. The method according to supplement 4, wherein,
   the logical channel group does not have a buffered packet data convergence protocol service data unit (PDCP SDU) or the buffer size field to which the logical channel group corresponds is a first value (0),
   and the remaining time field to which the logical channel group corresponds is reserved or indicates a predetermined value.
6. The method according to supplement 4, wherein, the remaining time field to which the logical channel group corresponds indicates:
   a shortest remaining value of a packet data convergence protocol discard timer (PDCP discardTimer) among all packet data convergence protocol service data units (PDCP SDUs) buffered for the logical channel group but not yet transmitted, or among all packet data convergence protocol service data units (PDCP SDUs) included in a media access control protocol data unit (MAC PDU).
7. The method according to supplement 4, wherein,
   the remaining time field to which the logical channel group corresponds indicates:
   a shortest remaining value of a packet data convergence protocol discard timer (PDCP discardTimer) among all packet data convergence protocol service data units (PDCP SDUs) before a media access control protocol data unit (MAC PDU) is built, or among all packet data convergence protocol service data units (PDCP SDUs) buffered for the logical channel group when the delay status report (DSR) is triggered.
8. A method for receiving a delay status report, applicable to a network device, the method including:
   receiving, by the network device, a delay status report triggered by a terminal equipment for at least one logical channel group (LCG),
   wherein a logical channel group of the terminal equipment is configured for delay status reporting, wherein a remaining time to which the logical channel group corresponds is below a configured threshold, and the logical channel group has no pending delay status report.
9. A method for receiving a delay status report, applicable to a network device, the method including:
   receiving, by the network device, a delay status report triggered by a terminal equipment for at least one logical channel group (LCG),
   wherein a logical channel group of the terminal equipment is configured for delay status reporting, wherein a remaining time to which the logical channel group corresponds is below a configured threshold, and the logical channel group has no pending delay status report since a last time of assembling a delay status report media access control control element (DSR MAC CE).
10. A communication system, including a terminal equipment and a network device, wherein,
   the terminal equipment includes an apparatus for reporting delay information, the apparatus for reporting delay information including a first processing unit configured to control the terminal equipment to perform following operations:
   triggering at least one delay status report (DSR) by the terminal equipment; and
   reporting delay information for at least one logical channel group (LCG) by the terminal equipment,
   and the network device includes an apparatus for receiving delay information, the apparatus for receiving delay information including a fifth processing unit configured to control the network device to perform following operations:
      receiving delay information reported by a terminal equipment for at least one logical channel group (LCG), wherein the at least one logical channel group (LCG) includes:
      a configured logical channel group; and/or
      a logical channel group configured for delay status reporting; and/or
      a configured logical channel group having pending data; and/or
      a logical channel group configured for delay status reporting and having pending data; and/or
      a logical channel group configured for delay status reporting and having a remaining time below a configured threshold, or a logical channel group configured for delay status reporting and for which a delay status report is triggered, or a logical channel group configured for delay status reporting and having a pending delay status report; and/or
      a logical channel group for which the delay status report is triggered or a logical channel group to which the delay status report corresponds; and/or
      a logical channel group having pending data after a media access control protocol data unit (MAC PDU) containing a delay status report media access control control element (DSR MAC CE) is assembled.

## Claims

1. An apparatus for reporting delay information, applicable to a terminal equipment, the apparatus comprising a first processing unit configured to control the terminal equipment to perform following operations:
triggering at least one delay status report (DSR) by the terminal equipment; and
reporting delay information for at least one logical channel group (LCG) by the terminal equipment.

2. The apparatus according to claim 1, wherein,
the at least one LCG comprises:
a configured logical channel group; and/or
a logical channel group configured for delay status reporting; and/or
a configured logical channel group having pending data; and/or
a logical channel group configured for delay status reporting and having pending data; and/or
a logical channel group configured for delay status reporting and having a remaining time below a configured threshold, or a logical channel group configured for delay status reporting and for which a delay status report is triggered, or a logical channel group configured for delay status reporting and having a pending delay status report; and/or
a logical channel group for which the delay status report is triggered or a logical channel group to which the delay status report corresponds; and/or
a logical channel group having pending data after a media access control protocol data unit (MAC PDU) containing a delay status report media access control control element (DSR MAC CE) is assembled.

3. The apparatus according to claim 2, wherein,
the terminal equipment reports the delay information for a logical channel group, in the at least one logical channel group, in which a remaining time of pending data is less than or equal to a predetermined value.

4. The apparatus according to claim 3, wherein,
the remaining time comprises a shortest remaining value of a packet data convergence protocol (PDCP) discard timer of the pending data in the logical channel group.

5. The apparatus according to claim 2, wherein,
for a logical channel group configured for delay status reporting,
a radio resource control (RRC) message comprises an identifier (ID) of the logical channel group, and/or the logical channel group is configured with a remaining time threshold (remainingTimeThreshold) parameter.

6. The apparatus according to claim 1, wherein,
pending data comprise at least one of the following data:
a packet data convergence protocol service data unit (PDCP SDU), a packet data convergence protocol protocol data unit (PDCP PDU), a radio link control service data unit (RLC SDU), a radio link control service data unit (RLC SDU) segment, a radio link control protocol data unit (RLC PDU), or delay-critical data.

7. The apparatus according to claim 1, wherein,
the terminal equipment generates a delay status report media access control control element (DSR MAC CE).

8. The apparatus according to claim 7, wherein,
the delay status report media access control control element (DSR MAC CE) comprises a logical channel group field,
wherein the terminal equipment reports the delay information for the logical channel group with the logical channel group field set to 1.

9. The apparatus according to claim 7, wherein,
the delay status report media access control control element (DSR MAC CE) comprises a remaining time field and/or a buffer size field to which the logical channel group corresponds.

10. The apparatus according to claim 9, wherein,
the logical channel group has no buffered packet data convergence protocol service data unit (PDCP SDU) or the buffer size field to which the logical channel group corresponds is a first value (0),
and the remaining time field to which the logical channel group corresponds is reserved or indicates a predetermined value.

11. The apparatus according to claim 9, wherein,
the remaining time field to which the logical channel group corresponds indicates:
a shortest remaining value of a packet data convergence protocol discard timer (PDCP discardTimer) among all packet data convergence protocol service data units (PDCP SDUs) buffered for the logical channel group but not yet transmitted, or among all packet data convergence protocol service data units (PDCP SDUs) included in a media access control protocol data unit (MAC PDU).

12. The apparatus according to claim 9, wherein,
the remaining time field to which the logical channel group corresponds indicates:
a shortest remaining value of a packet data convergence protocol discard timer (PDCP discardTimer) among all packet data convergence protocol service data units (PDCP SDUs) before a media access control protocol data unit (MAC PDU) is built, or among all packet data convergence protocol service data units (PDCP SDUs) buffered for the logical channel group when the delay status report (DSR) is triggered.

13. An apparatus for triggering a delay status report, applicable to a terminal equipment, the apparatus comprising a third processing unit, the third processing unit being configured to control the terminal equipment to perform following operations:
configuring a logical channel group of the terminal equipment for delay status reporting, wherein a remaining time to which the logical channel group corresponds is below a configured threshold, and the logical channel group has no pending delay status report since last assembly of a delay status report media access control control element (DSR MAC CE); and
triggering a delay status report for the logical channel group.

14. An apparatus for receiving delay information, applicable to a network device, the apparatus comprising a fifth processing unit configured to control the network device to perform following operations:
receiving delay information reported by a terminal equipment for at least one logical channel group (LCG),
wherein,
the at least one logical channel group (LCG) comprises:
a configured logical channel group; and/or
a logical channel group configured for delay status reporting; and/or
a configured logical channel group having pending data; and/or
a logical channel group configured for delay status reporting and having pending data; and/or
a logical channel group configured for delay status reporting and having a remaining time below a configured threshold, or a logical channel group configured for delay status reporting and for which a delay status report is triggered, or a logical channel group configured for delay status reporting and having a pending delay status report; and/or
a logical channel group for which the delay status report is triggered or a logical channel group to which the delay status report corresponds; and/or
a logical channel group having pending data after a media access control protocol data unit (MAC PDU) containing a delay status report media access control control element (DSR MAC CE) is assembled.

15. The apparatus according to claim 14, wherein,
the network device receives delay information reported by the terminal equipment for a logical channel group, in the at least one logical channel group, in which a remaining time of pending data is less than or equal to a predetermined value.

16. The apparatus according to claim 15, wherein,
the remaining time comprises a shortest remaining value of a packet data convergence protocol discard timer (PDCP discardTimer) of the pending data in the logical channel group.

17. The apparatus according to claim 14, wherein,
for a logical channel group configured for delay status reporting,
a radio resource control (RRC) message comprises an identifier (ID) of the logical channel group, and/or the logical channel group is configured with a remaining time threshold (remainingTimeThreshold) parameter.

18. The apparatus according to claim 14, wherein,
a pending data comprise at least one of the following data:
a packet data convergence protocol service data unit (PDCP SDU), a packet data convergence protocol protocol data unit (PDCP PDU), a radio link control service data unit (RLC SDU), a radio link control service data unit (RLC SDU) segment, a radio link control protocol data unit (RLC PDU), or delay-critical data.

19. The apparatus according to claim 14, wherein,
a delay status report media access control control element (DSR MAC CE) generated by the terminal equipment comprises a logical channel group field,
wherein the network device receives the delay information for the logical channel group with the logical channel group field set to 1.

20. The apparatus according to claim 19, wherein,
the delay status report media access control control element (DSR MAC CE) further comprises a remaining time field and/or a buffer size field to which the logical channel group corresponds.
